# EUROPÄISCHE PATENTSCHRIFT

(11) **EP 4 524 541 B1**
(45) Veröffentlichungstag und Bekanntmachung des Hinweises auf die Patenterteilung: **11.03.2026**
(21) Anmeldenummer: 24189663.8
(22) Anmeldetag: 19.07.2024
(51) Int. Cl.: G01M 3/32, B65D 83/14

(54) **PRÜFVORRICHTUNG UND VERFAHREN SOWIE PRÜFSTATION ZUR DICHTIGKEITSPRÜFUNG VON OFFENEN, NICHT BEFÜLLTEN DOSEN**
TESTING DEVICE AND METHOD AND TESTING STATION FOR TESTING THE TIGHTNESS OF OPEN UNFILLED CANS
DISPOSITIF DE CONTRÔLE ET PROCÉDÉ AINSI QUE STATION DE CONTRÔLE POUR CONTRÔLER L'ÉTANCHÉITÉ DE BOÎTES OUVERTES NON REMPLIES

(30) Priorität: 12.09.2023 DE 102023124506
(43) Veröffentlichungstag der Anmeldung: 19.03.2025
(73) Patentinhaber: G. Staehle GmbH u. Co. KG, 70372 Stuttgart (DE)
(72) Erfinder: Wondra, Andreas, 68766 Hockenheim (DE)
(74) Vertreter: Mammel und Maser Patentanwälte PartG mbB

(56) Entgegenhaltungen:
- CN-A- 105 173 541
- FR-A1- 2 515 348

## Beschreibung

Die Erfindung betrifft eine Prüfvorrichtung und ein Verfahren sowie eine Prüfstation zur Dichtigkeitsprüfung von offenen, nicht befüllten Dosen, insbesondere Aerosoldosen, wobei die Dose mehrteilig ist und eine Behälterwand, einen Boden und einen Deckel umfasst, wobei in dem Boden und dem Deckel jeweils eine Öffnung vorgesehen ist.

Aus der DE 26 07 272 C2 ist ein Verfahren und eine Vorrichtung für die Hochdruckprüfung von Aerosoldosen bekannt. Dabei ist vorgesehen, dass fertiggestellte, aber ventillose Aerosoldosen an der Ventilöffnung von einem Druckspender erfasst und daraufhin geprüft werden. Diese Aerosoldose umfasst nur eine Öffnung am Deckel der Dose. Der Boden der Aerosoldose ist geschlossen. In die Öffnung im Deckel der Aerosoldose wird eine Luftzuführdüse eingeführt. Anschließend wird die Spannhülse in Richtung auf die Luftzuführdüse verfahren, wodurch ein die Luftzuführdüse umgebendes Spanngummi im Durchmesser vergrößert wird, wodurch die Aerosoldose an ihre Ventilöffnung unter Abdichtung eingespannt wird. Anschließend wird die Aerosoldose über die Luftzuführdüse mit Druckluft beaufschlagt.

Aus der CN 105 173 541 A ist eine Prüfvorrichtung zur Prüfung einer Leckage in Aerosoldosen bekannt. Dabei ist vorgesehen, dass die Dose durch eine mechanische Spannung zu einem Prüfrad über die Öffnung der Dose fixiert wird. Im Anschluss daran wird die Prüfvorrichtung in die Dose eingeführt. Darauffolgend wird ein Kolbendichtungsmechanismus betätigt, um den Zylinder der Dose auf eine Undichtigkeit zu prüfen.

Aus der FR 2 515 348 A1 ist eine Prüfvorrichtung zur Dichtigkeitsprüfung von offenen, nicht befüllten Aerosoldosen bekannt. Die Aerosoldose ist mehrteilig ausgebildet und umfasst eine Behälterwand, einen geschlossenen Boden und einen Deckel, wobei in dem Deckel eine Öffnung vorgesehen ist. In die Öffnung des Deckels ist eine Spreizvorrichtung einsetzbar, durch welche Druckluft in das Innere der Dose zur Prüfung der Dichtigkeit eingebracht wird.

Durch diese Vorrichtung kann nur eine Aerosoldose mit einer Öffnung in dem Deckel geprüft werden. Zunehmend ist es erforderlich, mehrteilige Dosen auf deren Dichtigkeit zu prüfen, welche sowohl im Boden als auch im Deckel eine Öffnung umfassen. Solche mehrteiligen Dosen werden zur Befüllung mit zwei Komponenten eingesetzt. Bislang ist eine Dichtigkeitsprüfung von solchen Aerosoldosen nur manuell möglich. Deshalb ist auch keine 100 % Prüfung wirtschaftlich möglich.

Der Erfindung liegt die Aufgabe zugrunde, eine Prüfvorrichtung, ein Verfahren sowie eine Prüfstation zur Dichtigkeitsprüfung von offenen, nicht gefüllten Dosen, welche im Boden und im Deckel jeweils eine Öffnung umfassen, vorzuschlagen, durch welche eine automatisierte Prüfung der Dichtigkeit ermöglicht ist.

Diese Aufgabe wird durch eine Prüfvorrichtung gelöst, welche eine Führungshülse umfasst sowie eine an der Führungshülse vorgesehene Distanzhülse als auch eine Spreizvorrichtung, die der Führungshülse gegenüberliegend an der Distanzhülse vorgesehen ist, wobei die Distanzhülse einteilig mit der Führungshülse oder als separates Bauteil ausgebildet sein kann, sowie mit einer Zugstange, welche mit der Spreizvorrichtung verbunden ist und sich innerhalb der Distanzhülse in Richtung auf die Führungshülse erstreckt, wobei die Spreizvorrichtung ein ringförmiges Spannelement umfasst, welches aus einer ringförmigen Ruheposition in eine aufgespreizte Arbeitsposition überführbar ist. Diese Prüfvorrichtung ermöglicht, dass die Spreizvorrichtung durch die Öffnung im Deckel hindurchführbar ist und in der Öffnung im Boden der Dose positionierbar ist, und die Führungshülse in der Öffnung des Deckels positionierbar ist, sodass daraufhin eine Abdichtung der Öffnung im Boden als auch im Deckel nach dem Überführen der Dose in eine Prüfposition zur Prüfvorrichtung ermöglicht ist. Somit kann ein Innenraum der Dose mit zwei Öffnungen mit einem Druckmedium zur Prüfung der Dichtigkeit beaufschlagt werden, da durch die Prüfvorrichtung sowohl die Öffnung im Boden als auch die Öffnung im Deckel der nicht befüllten Dose abgedichtet werden kann.

Bevorzugt ist vorgesehen, dass die Distanzhülse der Prüfvorrichtung eine Länge aufweist, sodass in der Prüfposition der Dose zur Prüfvorrichtung die Führungshülse in der Öffnung des Deckels der Dose und die Spreizvorrichtung in der Öffnung des Bodens der Dose positionierbar ist.

Die Spreizvorrichtung umfasst bevorzugt eine Aufnahmehülse mit einem Halteabschnitt zur Aufnahme des ringförmigen Spannelements sowie ein Spreizelement, welches dem Halteabschnitt der Aufnahmehülse zugeordnet ist, wobei das Spreizelement eine zum Spannelement weisende, konisch verlaufende Spreizfläche umfasst. Die Spreizfläche des Spreizelementes weist in Richtung Führungsbuchse, sodass beim Verfahren der Spreizfläche in Richtung auf die Führungshülse das Spannelement radial nach außen ausgeweitet wird.

Des Weiteren ist bevorzugt vorgesehen, dass die Spreizvorrichtung in der Ruheposition mit einem Außenumfang der Aufnahmehülse, einem Außenumfang des Spreizelementes und/oder einem Außenumfang des Spannelementes ausgebildet ist, welche einen gemeinsamen Hülldurchmesser aufweisen. Dieser Hülldurchmesser ist kleiner als die Öffnung im Boden und Deckel der Dose, sodass die Spreizvorrichtung in der Ruheposition durch diese Öffnungen im Deckel und Boden eingeführt bzw. hindurchgeführt werden kann.

Vorzugsweise ist der Hülldurchmesser der Spreizvorrichtung gleich oder kleiner als ein Außenumfang der Führungshülse.

Die Spreizvorrichtung ist bevorzugt durch eine Hubbewegung der Zugstange in Richtung auf die Führungshülse in die Arbeitsposition überführbar ist, wodurch das Spannelement durch die Spreizfläche des Spreizelementes radial nach außen ausgeweitet ist. Dies ermöglicht eine einfache Betätigung der Spreizvorrichtung. Zudem kann nach dem Einführen der Spreizvorrichtung in die Öffnung im Boden der Dose das Spannelement den Boden hintergreifen und abdichtend an dem Rand der Öffnung im Boden der Dose angreifen.

Vorteilhafterweise ist die Spreizvorrichtung in einer Arbeitsposition mediendicht zur Öffnung im Boden der Dose anordenbar.

Des Weiteren ist bevorzugt vorgesehen, dass ein Hubweg des Spreizelementes von der Ruheposition der Spreizvorrichtung in die Arbeitsposition durch einen an dem Halteabschnitt der Aufnahmehülse vorgesehenen Anschlag begrenzt ist. Dies ermöglicht, dass das Spreizelement in nur einem bestimmten Umfang aufgeweitet wird, unabhängig einer angesteuerten Hubbewegung der Zugstange. Dadurch ist auch eine hohe Wiederholgenauigkeit bei einer abdichtenden Anordnung der Spreizvorrichtung zum Boden der Dose gegeben.

Die Zugstange kann an einem der Spreizvorrichtung gegenüberliegenden Ende einen Anschlussabschnitt für ein daran anschließbares Antriebselement aufweisen. Bevorzugt ist die Zugstange ausgehend von dem Anschlussabschnitt in Richtung auf die Spreizvorrichtung als ein Rohr ausgebildet und weist zumindest eine in der Umfangswand der Zugstange vorgesehene Öffnung auf, die benachbart zu einer Öffnung in der Umfangswand der Dichthülse angeordnet ist. Insbesondere bei der Positionierung der Spreizvorrichtung in der Arbeitsposition ist die zumindest eine Öffnung in der Zugstange vorzugsweise fluchtend zu der zumindest einen Öffnung in der Distanzhülse ausgerichtet. Dadurch kann ein Druckmedium zur Dichtigkeitsprüfung über die Zugstange und die Distanzhülse strömungsgünstig dem Innenraum der Dose zugeführt werden.

Die der Erfindung zugrundeliegende Aufgabe wird des Weiteren durch ein Verfahren zur Dichtigkeitsprüfung von offenen, nicht befüllten Dosen gelöst, bei dem die Dose mit einem Zuführteller einer Prüfstation zugeführt wird, welche an einem Prüfrad zumindest eine Prüfkammer umfasst, in der durch eine Aufnahme eine Prüfvorrichtung in der Prüfkammer gehalten wird, bei dem die Prüfvorrichtung und/oder die Dose durch zumindest eine Hubbewegung aufeinander zubewegt werden, sodass die Prüfvorrichtung innerhalb der Dose positioniert wird und vorzugsweise die Prüfkammer durch den Zuführteller geschlossen wird, bei dem die Prüfvorrichtung aus einer Ruheposition in eine Arbeitsposition übergeführt wird und eine Spreizvorrichtung der Prüfvorrichtung ausgeweitet wird, die die Öffnung des Bodens der Dose hintergreift und abdichtet und durch das Überführen der Prüfvorrichtung in die Arbeitsposition die Dose gegen ein Dichtelement an der Aufnahme gedrückt wird, welches eine Führungshülse der Prüfvorrichtung abdichtend umgibt und an der Öffnung des Deckels der Dose abdichtend anliegt. Die Dose wird durch das Überführen der Prüfvorrichtung, insbesondere der Spreizvorrichtung, aus der Ruheposition in die Arbeitsposition in eine Prüfposition zur Prüfvorrichtung übergeführt. Durch dieses Verfahren ist ermöglicht, dass die offene, nicht befüllte Dose mit einer Öffnung in dem Boden und in dem Deckel geprüft werden kann, da durch die Prüfvorrichtung sowohl die Öffnung im Boden als auch die Öffnung im Deckel gleichzeitig geschlossen wird. Durch diese Prüfvorrichtung wird somit eine 100 % Prüfung von offenen, nicht gefüllten Dosen mit jeweils einer Öffnung im Boden und im Deckel ermöglicht.

Bevorzugt ist vorgesehen, dass die Dose in der Prüfposition zu der Prüfvorrichtung freihängend durch die Prüfvorrichtung gehalten wird. Dies ermöglicht, dass bei einer Druckbeaufschlagung des Innenvolumens der Dose mit einem Druckmedium die Dose sich gegebenenfalls aufweiten und/oder längen kann. Eine Beeinträchtigung der Druckprüfung ist dadurch nicht gegeben.

Des Weiteren ist bevorzugt vorgesehen, dass die Prüfvorrichtung mit einem an der Zugstange angreifenden Antriebselement der Prüfstation durch eine Hubbewegung aktiviert wird. Diese Hubbewegung ist vorteilhafterweise synchronisiert mit der zuvor erfolgenden Positionierung der Prüfvorrichtung in der Dose und dem vorzugsweise Schließen der Prüfkammer mit dem Zuführteller.

Nach dem Überführen der Prüfvorrichtung in die Arbeitsposition wird vorteilhafterweise die Prüfvorrichtung mit einem Prüfmedium, insbesondere Luft, beaufschlagt, welches dem Innenraum der Dose zugeführt wird, wobei vorzugsweise der herrschende Druck in der Prüfkammer überwacht wird. Dadurch kann in relativ kurzer Zeit eine mögliche Leckage der mehrteiligen Dose ermittelt werden.

Insbesondere ist vorgesehen, dass die Dose mit einem Prüfdruck von bis zu 10 bar beaufschlagt wird. Vorteilhafterweise kann die Druckbeaufschlagung über eine Zeitdauer von weniger als 4 Sekunden erfolgen. Bevorzugt beträgt die Prüfzeit 2,5 bis 3 Sekunden. Mittels einer Sensorik, welche der Prüfkammer zugeordnet ist, kann eine mögliche Leckage der Dose erfasst werden.

Bevorzugt ist vorgesehen, dass die Dose in der Prüfposition zur Prüfvorrichtung gegenüber einer Aufstandsfläche des Zuführtellers abgehoben ist, vorzugsweise in einem Abstand, der kleiner als eine Längenänderung der Dose bei der Druckbeauftragung mit dem Prüfdruck des Prüfmediums ist.

Des Weiteren ist bevorzugt vorgesehen, dass nach erfolgter Dichtigkeitsprüfung durch die Druckbeaufschlagung mit dem Prüfmedium die Prüfkammer drucklos geschalten wird und die Prüfvorrichtung und die Dose in entgegengesetzte Richtung zu dem vorausgegangenen Zusammenführen voneinander getrennt werden. Bei bestandener Dichtigkeitsprüfung wird die Dose weiterverarbeitet und bei nicht bestandener Dichtigkeitsprüfung wird die Dose ausgeschleust. Dadurch kann die Dichtigkeitsprüfung in eine Automatisierungsanlage eingebunden werden, in der die Dose nach der Dichtigkeitsprüfung beispielsweise befüllt wird.

Die der Erfindung zugrunde liegende Aufgabe wird des Weiteren durch eine Prüfstation zur Dichtigkeitsprüfung von offenen, nicht gefüllten Dosen, insbesondere Aerosoldosen, welche mehrteilig ausgebildet sind und eine Behälterwand mit einem daran angeordneten Boden und Deckel aufweisen, wobei in dem Boden und in dem Deckel jeweils eine Öffnung vorgesehen ist, gelöst, welche einen Zuführteller zum Zuführen der Dosen und ein Prüfrad mit zumindest einer daran vorgesehenen Prüfkammer aufweist, wobei in der Prüfkammer eine Aufnahme vorgesehen ist, an der eine Prüfvorrichtung gehalten ist und welche eine Vorrichtung zur Bereitstellung eines Druckmediums sowie eine Sensoreinrichtung an oder in der Prüfkammer zur Erfassung eines Prüfdruckes in der Prüfkammer umfasst, wobei die Prüfvorrichtung nach einem der vorbeschriebenen Ausführungsformen ausgebildet ist. Beim Einsatz einer solchen Prüfvorrichtung kann das vorgeschriebene Verfahren zur Dichtigkeitsprüfung in der Prüfstation durchgeführt werden. Zudem kann eine automatisierte Dichtigkeitsprüfung mit einer hohen Taktzahl erfolgen.

Die Höhe der Prüfkammer ist dabei derart ausgestaltet, dass diese länger als eine Höhe der zu prüfenden Dose ausgebildet ist, sodass die Dose freihängend in der Prüfkammer aufgenommen werden kann und bei der Beauftragung mit einem Prüfdruck der Boden der Dose nicht auf dem Zuführteller aufliegt.

Des Weiteren ist bevorzugt vorgesehen, dass die Aufnahme der Prüfkammer eine Führungshülse der Prüfvorrichtung umgibt und zwischen der Aufnahme und der Führungshülse ein Dichtelement vorgesehen ist. Dadurch kann die Schnittstelle zwischen der Führungsbuchse der Prüfvorrichtung und der Aufnahme abgedichtet werden. Gleichzeitig ist ermöglicht, dass dieses Dichtelement an einer Oberseite der Öffnung der Dose bei der Positionierung der Dose in der Prüfposition abdichtend anliegt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittansicht einer Prüfvorrichtung zur Dichtigkeitsprüfung von Dosen in einer Ruheposition,
- Figur 2: eine schematische Schnittansicht einer Spreizvorrichtung der Prüfvorrichtung gemäß Figur 1 in einer Arbeitsposition,
- Figur 3: eine schematische Seitenansicht eines Arbeitsschrittes zur Durchführung der Dichtigkeitsprüfung,
- Figur 4: eine schematische Seitenansicht eines weiteren Arbeitsschrittes zur Durchführung der Dichtigkeitsprüfung,
- Figur 5: eine schematisch vergrößerte Ansicht des Details A in Figur 4,
- Figur 6: eine schematisch vergrößerte Ansicht des Details B in Figur 4,
- Figur 7: eine schematische Seitenansicht einer Dose in einer Prüfposition zur Prüfvorrichtung,
- Figur 8: eine schematisch vergrößerte Ansicht des Details C in Figur 7,
- Figur 9: eine schematisch vergrößerte Ansicht des Details D gemäß Figur 7, und
- Figur 10: eine schematische Seitenansicht einer Druckprüfung der Dose.

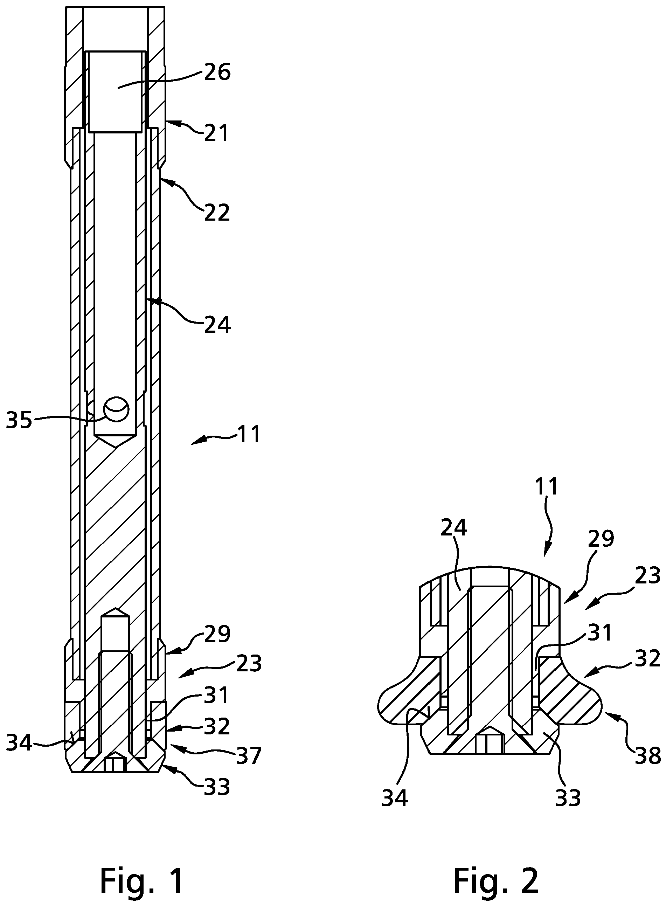

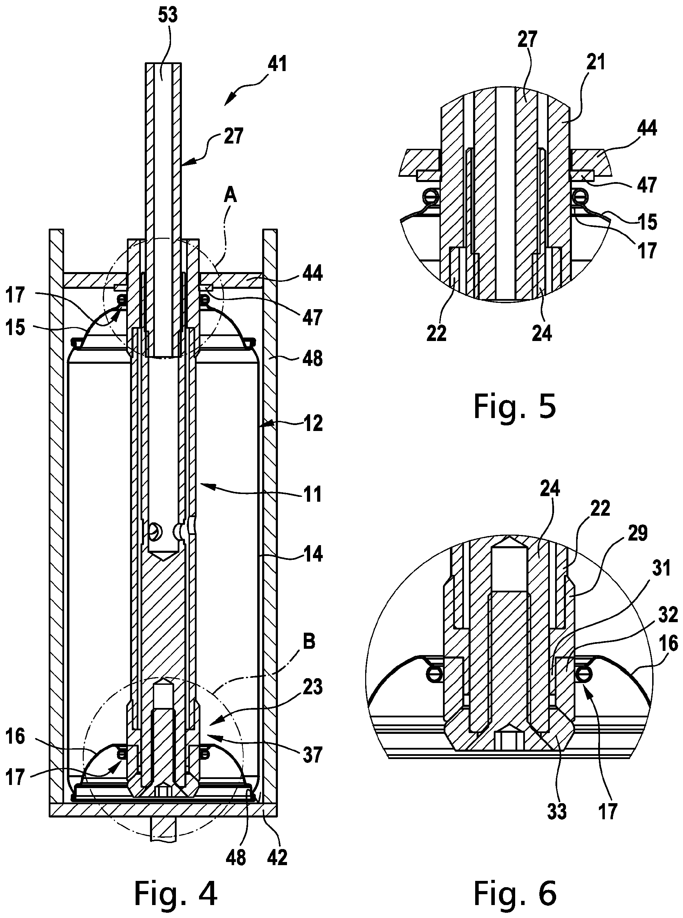

In Figur 1 ist eine schematische Schnittansicht einer Prüfvorrichtung 11 dargestellt. Diese Prüfvorrichtung 11 ist stabförmig ausgebildet und weist einen zylindrischen Außenumfang auf. Diese Prüfvorrichtung 11 dient zur Dichtigkeitsprüfung von offenen, nicht befüllten Dosen 12. Eine solche Dose 12 ist beispielsweise in einer Schnittansicht in Figur 4 dargestellt. Diese Dose 12 ist mehrteilig ausgebildet. Die Dose 12 umfasst eine Behälterwand bzw. eine Umfangswand 14, einen Deckel 15 und einen Boden 16. Sowohl in dem Deckel 15 als auch in dem Boden 16 ist jeweils eine Öffnung 17 vorgesehen. Bei solchen Dosen 12 handelt es sich um Aerosoldosen, welche für eine Zweikomponenten-Befüllung ausgebildet sind. Die Verbindungsstellen zwischen dem Boden 16 und der Behälterwand 14 einerseits und dem Deckel 15 und der Behälterwand 14 andererseits sind auf eine mögliche Leckage hin zu prüfen. Diese Verbindungsstellen sind beispielsweise durch eine Falzverbindung, insbesondere einen Doppelfalz, ausgebildet.

Die Prüfvorrichtung 11 umfasst ein Führungshülse 21. An der Führungshülse 21 ist eine Distanzhülse 22 vorgesehen. Beispielsweise können diese beiden Komponenten durch eine Verschraubung miteinander verbunden sein. Alternativ können die Führungshülse 21 und die Distanzhülse 22 auch einteilig ausgebildet sein. An einem der Führungshülse 21 gegenüberliegenden Ende der Distanzhülse 22 ist eine Spreizvorrichtung 23 vorgesehen. Innerhalb der Distanzhülse 22 ist eine Zugstange 24 vorgesehen. Die Zugstange 24 kann innerhalb der Distanzhülse 22 axial verschiebbar geführt sein. Diese Zugstange 24 ist an einem Ende mit der Spreizvorrichtung 23 verbunden und weist am gegenüberliegenden Ende einen Anschlussabschnitt 26 auf. An diesem Anschlussabschnitt 26 ist ein Antriebselement 27 montierbar, welches ein Teil einer Prüfstation 41 ist.

Die Spreizvorrichtung 23 umfasst eine Aufnahmehülse 29, die an einem Ende der Distanzhülse 22 befestigt ist. Die Aufnahmehülse 29 umfasst des Weiteren einen Halteabschnitt 31, der im Außenumfang kleiner als ein Außenumfang der Aufnahmehülse 29 ausgebildet ist. Auf diesem Außenumfang des Halteabschnitts 31 ist ein Spannelement 32 positioniert. Das Spannelement 32 erstreckt sich über die Länge des Halteabschnitts 31 und darüber hinaus. Am stirnseitigen Ende der Spreizvorrichtung 23 ist ein Spreizelement 33 vorgesehen. Dieses Spreizelement 33 ist mit der Zugstange 24 verbunden. Beispielsweise kann dies durch eine Schraubverbindung, insbesondere eine Senkkopfschraube, vorgesehen sein. Das Spreizelement 33 weist eine Spreizfläche 34 auf, an der beispielsweise eine Schrägfläche des Spannelementes 32 anliegt. Die Spreizvorrichtung 23 gemäß Figur 1 ist in einer Ausgangsposition bzw. Ruheposition 37 angeordnet. In dieser Ruheposition 37 fluchten ein Außendurchmesser des Aufnahmeabschnitts 26, ein Außendurchmesser des Spannelementes 32 sowie ein Außendurchmesser des Spreizelementes 33. Diese drei Elemente weisen bevorzugt alle einen gemeinsamen Hülldurchmesser auf.

Ein Außenumfang der Führungshülse 21 entspricht vorteilhafterweise dem Außenumfang der Spreizvorrichtung 23. Der Außenumfang der Führungshülse 21 und der Außenumfang Spreizvorrichtung 23 ist kleiner als die Öffnung 17 im Boden 16 und im Deckel 15 der Dose 12.

Die Zugstange 24 ist ausgehend von dem Anschlussabschnitt 26 in Richtung auf die Spreizvorrichtung 23 zumindest teilweise als ein Rohr ausgebildet. Die rohrförmige Ausgestaltung der Zugstange 24 kann sich bis zum mittleren Bereich der axialen Länge der Prüfvorrichtung 11 erstrecken. In dem Rohr der Zugstange 24 ist zumindest eine Öffnung 35 vorgesehen. Diese Öffnung 35 kommuniziert mit zumindest einer Öffnung 36 in der Distanzhülse 22. Dadurch wird ermöglicht, dass innerhalb der Prüfvorrichtung 11 über den Anschlussabschnitt 26 ein Druckmedium zugeführt werden kann, welches über die Öffnungen 35, 36 nach außen gelangt, d. h. einem Innenraum der Dose 12 zugeführt wird.

In Figur 2 ist die Spreizvorrichtung 23 in einer Arbeitsposition 38 dargestellt. Ausgehend von der Ruheposition 37 der Spreizvorrichtung 23 gemäß Figur 1 kann die Spreizvorrichtung 33 in die Arbeitsposition 38 gemäß Figur 2 durch eine Hubbewegung der Zugstange 24 übergeführt werden. Zwischen einem stirnseitigen Ende des Halteabschnitts 31 und dem Spreizelement 33 ist ein Abstand gebildet, der eine beschränkte Hubstrecke bzw. einen definierten Hubweg des Spreizelementes 33 in Richtung auf die Führungshülse 21 ermöglicht. Zum Überführen der Spreizvorrichtung 23 aus der in Figur 1 dargestellten Ruheposition 37 in eine Arbeitsposition 38, wie diese in Figur 2 dargestellt ist, durchläuft das Spreizelement 33 diese Hubstrecke, bis dieses beispielsweise an einer Stirnseite des Halteabschnitts 31 anliegt. In dieser Arbeitsposition 38 wird das Spannelement 32 radial nach außen ausgeweitet. Dabei gleitet das Spannelement 32 an der Spreizfläche 34 des Spreizelementes 33 entlang. Das Spannelement 32 ist vorzugsweise aus einem elastischen Material, insbesondere aus einem Polyurethan-Kautschuk ausgebildet. Bei dem Spannelement 32 handelt es sich bevorzugt um eine sogenannte Elastomerfeder. Vorteilhafterweise wird ein Material ausgewählt, welches sich für den Einsatz als Dichtung durch seine hochelastische Eigenschaft in Verbindung mit einer geringen Setzneigung bei häufigen Lastwechseln auszeichnet.

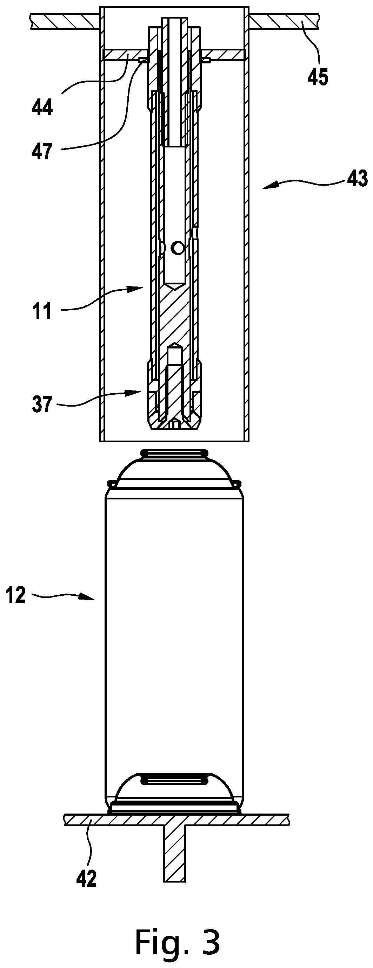

In den Figuren 3 bis 10 sind einzelne Schritte eines Verfahren zur Dichtigkeitsprüfung der offenen, nicht befüllten Dose 12, insbesondere eine Aerosoldose, dargestellt, welche mehrteilig ausgebildet ist und einen Boden 16 und einen Deckel 15 mit jeweils einer Öffnung 17 umfasst. Eine Prüfstation 41 umfasst zumindest einen Zuführteller 42, auf welchem die offene, nicht befüllte Dose 12 zur Dichtigkeitsprüfung stehend positioniert zugeführt wird. Des Weiteren umfasst die Prüfstation 41 zumindest eine Prüfkammer 43. Die Prüfkammer 43, auch Autoklave genannt, umfasst eine nach unten offene, zylindrische Kammer. Am oberen Ende der Kammer ist eine Aufnahme 44 vorgesehen, an welcher die vorbeschriebene Prüfvorrichtung 11 angeordnet ist. An einem Prüfrad 45 ist zumindest diese eine Prüfkammer 43 vorgesehen. Das Prüfrad 45 und der Zuführteller 42 sind Teil eines rotierenden Antriebes einer nicht näher dargestellten Maschine, welche die Prüfstationen 41 umfasst. Das Prüfrad 45 und der Zuführteller 42 werden bevorzugt um dieselbe Rotationsachse angetrieben. Bevorzugt werden das Prüfrad 45 und der Zuführteller 42 synchron angetrieben.

Ausgehend von der in Figur 3 dargestellten Position der Dose 12 zur Prüfvorrichtung 11 erfolgt eine Hubbewegung des Zuführtellers 42 in Richtung auf die Prüfkammer 43, sodass die Prüfvorrichtung 41 zunächst durch die Öffnung 17 in dem Deckel 15 hindurchgeführt wird und dann in die Öffnung 17 in dem Boden 16 der Dose 12 eintaucht. Die Hubbewegung wird beendet, nachdem der Zuführteller 42 beispielsweise am unteren Rand der Prüfkammer 43 anliegt. Diese Position ist in Figur 4 dargestellt. Alternativ zu der vorbeschriebenen Ausführungsform kann auch die Prüfkammer 43 auf die Dose 12 zubewegt werden. Ebenso ist möglich, dass das Prüfrad 45 und der Zuführteller 42 eine relative Hubbewegung zueinander ausführen, um in eine Position gemäß Figur 4 übergeführt zu werden.

Bei dem in Figur 4 dargestellten Arbeitsschritt ist die Führungshülse 21 innerhalb der Öffnung 17 des Deckels 15 positioniert. Die Spreizvorrichtung 23 ist innerhalb der Öffnung 17 des Bodens 16 der Dose 12 positioniert. Die Figur 5 zeigt schematisch vergrößert ein Detail A in Figur 4. Daraus ist zu erkennen, dass bei diesem Arbeitsschritt gemäß Figur 4 die Führungshülse 21 innerhalb der Öffnung 17 im Deckel 15 der Dose positioniert ist. Die Aufnahme 44 weist ein Dichtelement 47 auf, welches die Prüfvorrichtung 11, insbesondere die Führungshülse 21 abdichtend umgibt. Das Dichtelement 47 liegt jedoch bei diesem Arbeitsschritt noch nicht an einem oberen Rand der Öffnung 17 des Deckels 15 an.

In Figur 6 ist eine schematisch vergrößerte Ansicht des Details B in Figur 4 dargestellt. Bei diesem Arbeitsschritt in Figur 4 ist die Dose 12 auf einer Auflagefläche 48 des Zuführtellers 42 aufliegend positioniert. Die Spreizvorrichtung 23 befindet sich in der Ruheposition 37. Die Spreizvorrichtung 23 ist innerhalb der Öffnung 17 im Boden 16 der Dose 12 positioniert.

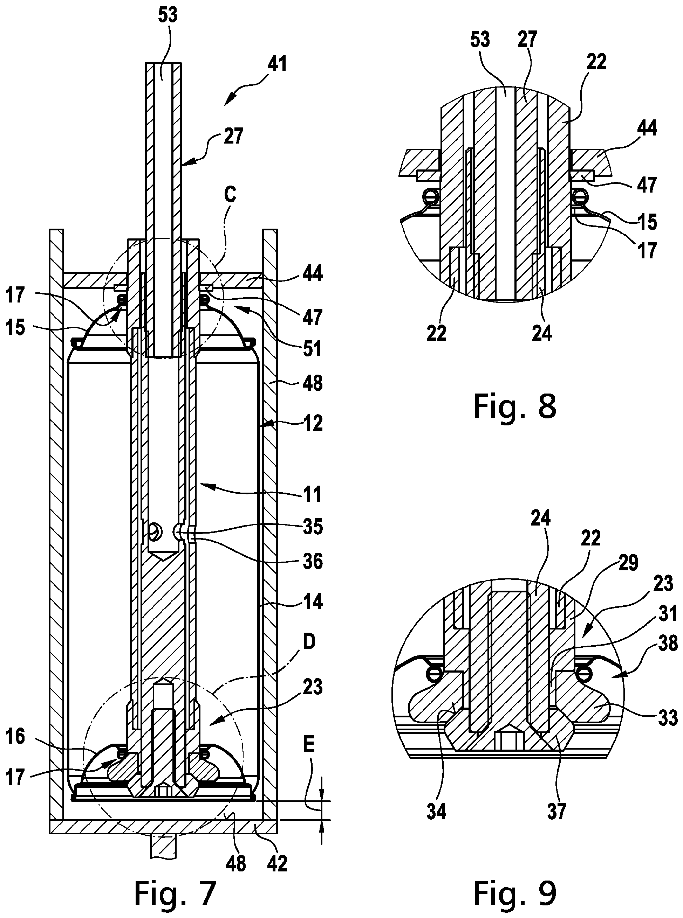

In Figur 7 ist die Dose 12 in einer Prüfposition 51 zu der Prüfvorrichtung 11 angeordnet. Ausgehend von der Positionierung der Dose 12 gemäß Figur 4 wird ein Hubweg eines Antriebselementes 27 über einen nicht näher dargestellten Antrieb der Prüfstation 41 angesteuert. Das Antriebselement 27 ist mit dem Anschlussabschnitt 26 der Zugstange 24 fest verbunden. Dadurch wird die Spreizvorrichtung 23 aus der Ruheposition 37 in die Arbeitsposition 38 übergeführt. In Figur 9 ist ein Detail D der Figur 7 schematisch vergrößert dargestellt. Die in der Arbeitsposition 38 angeordnete Spreizvorrichtung 23 hintergreift die Öffnung 17 im Boden 16 der Dose 12. Dabei liegt das Spannelement 32 abdichtend an einem inneren Rand der Öffnung 17 im Boden 16 an.

Durch die angesteuerte Hubbewegung des Antriebselementes 27 wird die Spreizvorrichtung 23 aus der Ruheposition 37 in die Arbeitsposition 38 übergeführt und gleichzeitig wird die Dose 12 vertikal nach oben angehoben, sodass ein Rand der Öffnung 17 des Deckels 15 an dem Dichtelement 47 der Aufnahme 44 anliegt bzw. abdichtend anliegt. Dies geht aus der Figur 8 hervor, welche eine schematisch vergrößerten Ansicht des Details C gemäß Figur 7 zeigt. Die Prüfvorrichtung 11 ist über die Führungshülse 21 fest zur Aufnahme 44 positioniert. Dadurch kann durch die Hubbewegung der Dose 12 über die Spreizvorrichtung 23 ein abdichtendes Anliegen des oberen Randes der Öffnung 17 des Deckels 15 an dem Dichtelement 47 der Aufnahme 44 erfolgen.

In der Ruheposition 37 der Spreizvorrichtung 23 ist die zumindest eine Öffnung 35 der Führungshülse 21 versetzt zu der zumindest einen Öffnung 36 in der Distanzhülse 22 angeordnet. Dies geht aus Figur 4 hervor. Nach dem Überführen der Dose 12 in die Prüfposition 51 ist die zumindest eine Öffnung 35 der Zugstange 24 vorzugsweise fluchtend zu der zumindest einen Öffnung 36 der Distanzhülse 22 angeordnet. Dies ist in Figur 7 dargestellt.

Bei der Positionierung der Dose 12 in der Prüfposition 51 ist die Dose 12 gegenüber der Auflagefläche 48 des Zuführtellers 42 abgehoben. Die Länge der Prüfkammer 43 ist derart bemessen, dass zumindest ein Abstand E zwischen der Auflagefläche 48 des Zuführtellers 42 und dem Boden 16 der Dose 12 nach Einnahme der Prüfposition 51 vorgesehen ist. Dieser Abstand E ist geringfügig größer als eine mögliche Längenänderung der Dose 12 bei einer Druckbeaufschlagung mit einem Prüfmedium.

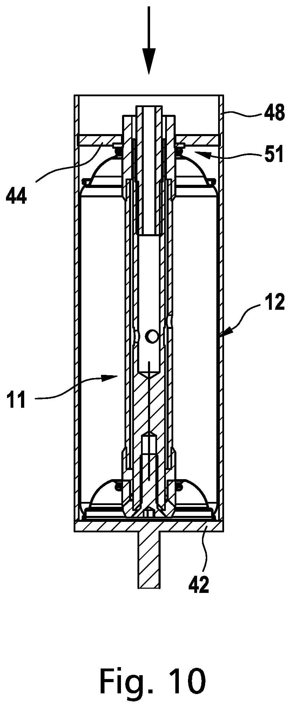

In Figur 10 ist die Dichtigkeitsprüfung der Dose 12 schematisch dargestellt. Das Antriebselement 27 umfasst eine Bohrung 53, über welche das Prüfmedium der Zugstange 24 zugeführt wird, sodass dieses Prüfmedium über die Öffnungen 35, 36 in den Innenraum der Dose 12 gelangen können. Das Prüfmedium kann beispielsweise Druckluft sein. Bevorzugt kann eine Druckbeaufschlagung von bis zu 10 bar vorgesehen sein. Durch eine nicht näher dargestellte Sensoreinrichtung, welche der Prüfkammer 43 zugeordnet ist, kann erfasst werden, ob das Prüfmedium aus der Dose 12 austritt und in die Prüfkammer 43 gelangt und somit undicht ist, oder ob die Dose 12 der Druckbeaufschlagung Stand hält und somit dicht ist.

Nach einer vorbestimmten Zeitdauer wird die Druckbeaufschlagung abgeschalten. Die zuvor beschriebenen Arbeitsschritte ausgehend von der Figur 3 bis zum Überführen der Dose 12 in die Prüfposition 51 gemäß Figur 7 werden nunmehr in umgekehrter Reihenfolge durchgeführt.

Sollte die Dose 12 undicht sein, wird diese als Ausschuss aussortiert. Sollte die Dichtigkeit der Dose 12 festgestellt werden, kann diese Dose 12, insbesondere Inline, weiterverarbeitet werden und beispielsweise einer Befüllstation zugeführt werden.

## Patentansprüche

1. Prüfvorrichtung zur Dichtigkeitsprüfung von offenen, nicht befüllten Dosen (12), insbesondere Aerosoldosen, wobei die Dosen (12) mehrteilig ausgebildet sind und eine Behälterwand (14), einen Boden (16) und einen Deckel (15) umfassen, wobei in dem Boden (16) und dem Deckel (15) jeweils eine Öffnung (17) vorgesehen ist,
- mit einer Führungshülse (21),
- mit einer an der Führungshülse (21) vorgesehenen Distanzhülse (22),
- mit einer Spreizvorrichtung (23), die der Führungshülse (21) gegenüberliegend an der Distanzhülse (22) vorgesehen ist,
- mit einer Zugstange (24), welche mit der Spreizvorrichtung (23) verbunden ist und sich innerhalb der Distanzhülse (22) in Richtung auf die Führungshülse (21) erstreckt,
- wobei die Spreizvorrichtung (23) ein ringförmiges Spannelement (32) umfasst, welches aus einer ringförmigen Ruheposition (37) in eine aufgespreizte Arbeitsposition (38) überführbar ist,
**dadurch gekennzeichnet,**
- **dass** die Prüfvorrichtung (11) aus einer Ruheposition (37) in eine Arbeitsposition (38) übergeführt und die Dose (12) in eine Prüfposition (51) zur Prüfvorrichtung (11) übergeführt wird, wobei eine Spreizvorrichtung (23) der Prüfvorrichtung (11) beim Überführen in die Arbeitsposition (38) aufgeweitet wird und die Öffnung (17) des Bodens (16) der Dose (12) abdichtend hintergreift und die Dose (12) gegen ein an der Aufnahme (44) der Prüfkammer (43) vorgesehenes Dichtelement (47) abdichtend positioniert.

2. Prüfvorrichtung nach Anspruch 1, **dadurch gekennzeichnet, dass** die Distanzhülse (22) eine Länge aufweist, sodass in einer Prüfposition (51) der Dose (12) zur Prüfvorrichtung (11) die Führungshülse (21) in der Öffnung (17) des Deckels (15) und die Spreizvorrichtung (23) in der Öffnung (17) des Bodens (16) der Dose (12) positionierbar ist.

3. Prüfvorrichtung nach Anspruch 1 oder 2, **dadurch gekennzeichnet, dass** die Spreizvorrichtung (23) eine Aufnahmehülse (29) mit einem Halteabschnitt (31) zur Aufnahme des ringförmigen Spannelementes (32) und ein dem Halteabschnitt (31) der Aufnahmehülse (29) zugeordnetes Spreizelement (33) umfasst, wobei das Spreizelement (33) eine zum Spannelement (32) weisende, konisch verlaufende Spreizfläche (34) aufweist, vorzugsweise dass in der Ruheposition (37) der Spreizvorrichtung (23) die Aufnahmehülse (29), das Spreizelement (33) und/oder das Spannelement (32) einen Außenumfang aufweisen, der auf einem gemeinsamen Hülldurchmesser liegt und vorzugsweise, dass der Hülldurchmesser der Spreizvorrichtung (23) dem Außenumfang der Führungshülse (21) entspricht oder kleiner ist, und vorzugsweise der Hülldurchmesser der Spreizvorrichtung (23) und der Außenumfang der Führungshülse (21) kleiner als die Öffnung (17) in dem Deckel (15) und dem Boden (16) der Dose (12) ist.

4. Prüfvorrichtung nach Anspruch 3, **dadurch gekennzeichnet, dass** eine Hubbewegung der Zugstange (24) in Richtung auf die Führungshülse (21) die Spreizvorrichtung (23) aus der Ruheposition (37) in die Arbeitsposition (38) überführt und dass das Spannelement (32) durch die Spreizfläche (34) des Spreizelementes (33) radial nach außen aufgeweitet ist und vorzugsweise eine Hubbewegung des Spreizelementes (33) von der Ruheposition (37) in die Arbeitsposition (38) durch einen stirnseitigen Anschlag an dem Halteabschnitt (31) der Aufnahmehülse (29) begrenzt ist.

5. Prüfvorrichtung nach einem der vorgehenden Ansprüche, **dadurch gekennzeichnet, dass** die Spreizvorrichtung (23) in der Arbeitsposition (38) mediendicht zur Distanzhülse (22) angeordnet ist.

6. Prüfvorrichtung nach einem der vorhergehenden Ansprüche, **dadurch gekennzeichnet, dass** an einem der Spreizvorrichtung (23) gegenüberliegenden Ende der Zugstange (24) ein Anschlussabschnitt (26) für ein daran anordenbares Antriebselement (27) vorgesehen ist, und vorzugsweise die Zugstange (24) ausgehend von dem Anschlussabschnitt (26) in Richtung auf die Spreizvorrichtung (23) als ein Rohr ausgebildet ist und zumindest eine in der Umfangswand vorgesehene Öffnung (35) aufweist, die benachbart zu zumindest einer Öffnung (36) in der Umfangswand der Distanzhülse (22) ausgerichtet ist.

7. Verfahren zur Dichtigkeitsprüfung von offenen, nicht befüllten Dosen (12), insbesondere Aerosoldosen, welche mehrteilig ausgebildet sind und eine Behälterwand (14) mit einem daran angeordneten Boden (16) und einem Deckel (15) umfassen, wobei in dem Boden (16) und dem Deckel (15) jeweils eine Öffnung (17) vorgesehen ist,
- bei dem die Dose (12) mit einem Zuführteller (42) einer Prüfstation (41) zugeführt wird, welche an einem Prüfrad (45) zumindest eine Prüfkammer (43) umfasst, in der durch eine Aufnahme (44) eine Prüfvorrichtung (11) in der Prüfkammer (43) gehalten wird,
- bei dem die Prüfvorrichtung (11) und/oder die Dose (12) aufeinander zubewegt werden, sodass die Prüfvorrichtung (11) innerhalb der Dose (12) positioniert wird,
**dadurch gekennzeichnet,**
- **dass** die Prüfvorrichtung (11) aus einer Ruheposition (37) in eine Arbeitsposition (38) übergeführt und die Dose (12) in eine Prüfposition (51) zur Prüfvorrichtung (11) übergeführt wird, wobei eine Spreizvorrichtung (23) der Prüfvorrichtung (11) beim Überführen in die Arbeitsposition (38) aufgeweitet wird und die Öffnung (17) des Bodens (16) der Dose (12) abdichtend hintergreift und die Dose (12) gegen ein an der Aufnahme (44) der Prüfkammer (43) vorgesehenes Dichtelement (47) abdichtend positioniert.

8. Verfahren nach Anspruch 7, **dadurch gekennzeichnet, dass** die Dose (12) in der Prüfposition (51) zu der Prüfvorrichtung (11) frei hängend durch die Prüfvorrichtung (11) gehalten wird.

9. Verfahren nach Anspruch 7 oder 8, **dadurch gekennzeichnet, dass** die Prüfvorrichtung (11) mit einem an der Zugstange (24) angreifenden Antriebselement (27) der Prüfstation (41) durch eine Hubbewegung aktiviert und in die Arbeitsposition (38) übergeführt wird.

10. Verfahren nach einem der Ansprüche 7 bis 9, **dadurch gekennzeichnet, dass** nach dem Überführen der Dose (12) in die Prüfposition (51) die Dose (12) mit einem Druckmedium, insbesondere Druckluft, beaufschlagt wird, welches einem Innenraum der Dose (12) zugeführt wird, und bevorzugt ein herrschender Druck in der Prüfkammer (43) durch eine Sensoreinrichtung überwacht wird und insbesondere die Dosen (12) mit einem Prüfdruck von bis zu 10 bar, vorzugsweise über eine vorbestimmte Zeitdauer, beaufschlagt werden.

11. Verfahren nach einem der Ansprüche 7 bis 10, **dadurch gekennzeichnet, dass** die Dose (12) in der Prüfposition (51) zur Prüfvorrichtung (11) gegenüber einer Auflagefläche (48) des Zuführtellers (42) abgehoben wird, vorzugsweise in einem Abstand (E), der größer als eine Längenänderung der Dose (12) bei einer Druckbeaufschlagung mit dem Prüfdruck des Prüfmediums ist.

12. Verfahren nach einem der Ansprüche 7 bis 11, **dadurch gekennzeichnet, dass** nach erfolgter Dichtigkeitsprüfung der Dose (12) die Druckbeaufschlagung der Dose (12) mit dem Prüfmedium abgeschalten wird und die Prüfvorrichtung (11) und die Dose (12) in entgegengesetzte Richtung zum Überführen in die Prüfposition (51) voneinander getrennt werden.

13. Verfahren nach einem der Ansprüche 7 bis 12, **dadurch gekennzeichnet, dass** die Dose bei einer bestandenen Dichtigkeitsprüfung (12) in eine nachfolgende Bearbeitungsstation zur Weiterverarbeitung übergeführt wird und dass bei einer nicht bestandenen Dichtigkeitsprüfung die Dose (12) aus der Prüfstation (41) als Ausschuss ausgeschleust wird.

14. Prüfstation zur Dichtigkeitsprüfung von offenen, nicht befüllten Dosen (12), insbesondere Aerosoldosen, welche mehrteilig ausgebildet sind und eine Behälterwand (14) mit einem daran angeordneten Boden (16) und einem Deckel (15) umfassen, wobei in dem Boden (16) und dem Deckel (15) jeweils eine Öffnung (17) vorgesehen ist,
- mit einem Zuführteller (42) zum Zuführen der Dosen (12),
- mit an einem Prüfrad (45) vorgesehene Prüfkammern (43), in denen jeweils mit einer Aufnahme (44) eine Prüfvorrichtung (11) gehalten ist,
- mit einer Vorrichtung zur Bereitstellung eines Druckmediums mit einem Prüfdruck,
- mit einer Sensoreinrichtung an oder in der Prüfkammer (43) zur Druckerfassung,
- wobei die Prüfvorrichtung (11) nach einem der vorhergehenden Ansprüche 1 bis 6 ausgebildet ist.

15. Prüfstation nach Anspruch 14, **dadurch gekennzeichnet, dass** die Höhe der Prüfkammer (43) größer als die Höhe der zu prüfenden Dose (12) ist und/oder dass in der Aufnahme (44) der Prüfkammer (43) die Prüfvorrichtung (11) gehalten ist und an der Aufnahme (44) ein Dichtungselement (47) vorgesehen ist, welches radial zur Führungshülse (43) abdichtend anliegt und welches axial an der Öffnung (17) der Dose (12) in der Prüfposition (51) anliegt.

## Claims

1. Testing device for testing the tightness of open, unfilled cans (12), in particular aerosol cans, wherein the cans (12) are formed in several parts and comprise a container wall (14), a base (16) and a lid (15), wherein an opening (17) is provided in each of the base (16) and the lid (15),
- with a guide sleeve (21),
- with a spacer sleeve (22) provided on the guide sleeve (21),
- with a spreading device (23), which is provided opposite the guide sleeve (21) on the spacer sleeve (22),
- with a pull rod (24), which is connected to the spreading device (23) and extends within the spacer sleeve (22) in the direction of the guide sleeve (21),
- wherein the spreading device (23) comprises an annular clamping element (32) which is transferrable from an annular rest position (37) into a spreaded working position (38),
**characterized in**
- **in that** the testing device (11) is transferred from a rest position (37) into a working position (38) and the can (12) is transferred into a testing position (51) relative to the testing device (11), wherein a spreading device (23) of the testing device (11) is widened during the transfer into the working position (38) and sealingly engages behind the opening (17) of the base (16) of the can (12) and sealingly positions the can (12) against a sealing element (47) provided on the receptacle (44) of the test chamber (43).

2. Testing device according to claim 1, **characterized in that** the spacer sleeve (22) has a length such that, in a test position (51) of the can (12) relative to the test device (11), the guide sleeve (21) is positionable in the opening (17) of the lid (15) and the spreading device (23) is positionable in the opening (17) of the base (16) of the can (12).

3. Testing device according to claim 1 or 2, **characterized in that** the spreading device (23) comprises a receiving sleeve (29) with a holding section (31) for receiving the annular clamping element (32) and a spreading element (33) associated with the holding section (31) of the receiving sleeve (29), wherein the spreading element (33) has a conically extending expanding surface (34) pointing towards the clamping element (32), preferably in the rest position (37) of the spreading device (23) the receiving sleeve (29), the spreading element (33) and/or the clamping element (32) have an outer circumference which lies on a common envelope diameter and preferably that the envelope diameter of the spreading device (23) corresponds to the outer circumference of the guide sleeve (21) or is smaller, and preferably the envelope diameter of the expanding device (23) and the outer circumference of the guide sleeve (21) is smaller than the opening (17) in the lid (15) and the base (16) of the can (12).

4. Testing device according to claim 3, **characterized in that** a lifting movement of the pull rod (24) in the direction of the guide sleeve (21) transfers the spreading device (23) from the rest position (37) into the working position (38) and **in that** the clamping element (32) is spreaded radially outwards by the spreading surface (34) of the spreading element (33), and preferably a stroke movement of the spreading element (33) from the rest position (37) into the working position (38) is limited by an end stop on the retaining section (31) of the receiving sleeve (29).

5. Testing device according to one of the preceding claims, **characterized in that** the spreading device (23) is arranged in the working position (38) in a media-tight manner with respect to the spacer sleeve (22).

6. Testing device according to one of the preceding claims, **characterized in that** a connection section (26) for a drive element (27) which is arrangeable thereon is provided at an end of the pull rod (24) opposite the spreading device (23), and preferably the pull rod (24) is designed as a tube starting from the connection section (26) in the direction of the spreading device (23) and has at least one opening (35) provided in the circumferential wall, which opening is aligned adjacent to at least one opening (36) in the circumferential wall of the spacer sleeve (22).

7. Method for testing the tightness of open, unfilled cans (12), in particular aerosol cans, which are constructed in several parts and comprise a container wall (14) with a base (16) arranged thereon and a lid (15), an opening (17) being provided in each of the base (16) and the lid (15),
- in which the can (12) is fed with a feed plate (42) to a test station (41) which comprises at least one test chamber (43) on a test wheel (45), in which test chamber (43) a test device (11) is held by a receptacle (44),
- in which the test device (11) and/or the can (12) are moved towards each other so that the test device (11) is positioned inside the can (12), **characterized in**
- **that** the testing device (11) is moved from a rest position (37) into a working position (38) and the can (12) is moved into a testing position (51) relative to the testing device (11), wherein a spreading device (23) of the testing device (11) is widened during the transfer into the working position (38) and sealingly engages behind the opening (17) of the base (16) of the can (12) and sealingly positions the can (12) against a sealing element (47) provided on the receptacle (44) of the test chamber (43).

8. Method according to claim 7, **characterized in that** the can (12) is held freely suspended in the test position (51) relative to the test device (11) by the test device (11).

9. Method according to claim 7 or 8, **characterized in that** the testing device (11) is activated by a lifting movement with a drive element (27) of the testing station (41) engaging on the pull rod (24) and is transferred into the working position (38).

10. Method according to one of claims 7 to 9, **characterized in that**, after the can (12) has been transferred into the test position (51), the can (12) is acted upon by a pressure medium, in particular compressed air, which is supplied to an interior of the can (12), and preferably a prevailing pressure in the test chamber (43) is monitored by a sensor device and, in particular, the cans (12) are acted upon by a test pressure of up to 10 bar, preferably over a predetermined period of time.

11. Method according to one of claims 7 to 10, **characterized in that** the can (12) is lifted in the test position (51) relative to the test device (11) with respect to a support surface (48) of the feed plate (42), preferably at a distance (E) which is greater than a change in length of the can (12) when pressurized with the test pressure of the test medium.

12. Method according to one of claims 7 to 11, **characterized in that**, after the leak test of the can (12) has been performed, the pressurization of the can (12) with the test medium is switched off and the test device (11) and the can (12) are separated from each other in opposite directions for transfer to the test position (51).

13. Method according to one of claims 7 to 12, **characterized in that** the can is transferred to a subsequent processing station for further processing if the leak test (12) is passed, and **in that** the can (12) is ejected from the testing station (41) as a reject if the leak test is not passed.

14. Testing station for testing the tightness of open, unfilled cans (12), in particular aerosol cans, which are constructed in several parts and comprise a container wall (14) with a base (16) arranged thereon and a lid (15), wherein an opening (17) is provided in each of the base (16) and the lid (15),
- with a feed plate (42) for feeding the cans (12),
- with test chambers (43) provided on a test wheel (45), in each of which a test device (11) is held by a receptacle (44),
- with a device for providing a pressure medium with a test pressure,
- with a sensor device on or in the test chamber (43) for pressure detection,
- wherein the testing device (11) is designed according to one of the preceding claims 1 to 6.

15. Testing station according to claim 14, **characterized in that** the height of the testing chamber (43) is greater than the height of the can (12) to be tested and/or **in that** the testing device (11) is held in the receptacle (44) of the testing chamber (43) and a sealing element (47) is provided on the receptacle (44), which sealing element bears radially against the guide sleeve (43) in a sealing manner and which bears axially against the opening (17) of the can (12) in the testing position (51).

## Revendications

1. Dispositif de contrôle pour contrôler l'étanchéité de boîtes ouvertes non remplies (12), en particulier des bombes aérosols, les boîtes (12) étant constituées de plusieurs parties et comprenant une paroi de récipient (14), un fond (16) et un couvercle (15), une ouverture (17) étant prévue dans le fond (16) et dans le couvercle (15),
- avec une douille de guidage (21),
- avec une douille d'écartement (22) prévue sur la douille de guidage (21),
- avec un dispositif d'écartement (23) prévu sur la douille d'écartement (22) en face de la douille de guidage (21),
- avec une tige de traction (24) qui est reliée au dispositif d'écartement (23) et s'étend à l'intérieur de la douille d'écartement (22) en direction de la douille de guidage (21),
- le dispositif d'écartement (23) comprenant un élément de serrage annulaire (32) qui peut être transféré d'une position de repos annulaire (37) à une position de travail écartée (38),
**caractérisé en ce**
- **que** le dispositif de contrôle (11) est transféré d'une position de repos (37) dans une position de travail (38) et que la boîte (12) est transférée dans une position de contrôle (51) vers le dispositif de contrôle (11), un dispositif d'écartement (23) du dispositif de contrôle (11) est écarté lors du passage en position de travail (38) et s'engage de manière non étanche derrière l'ouverture (17) du fond (16) de la boîte (12) et positionne la boîte (12) de manière étanche contre un élément d'étanchéité (47) prévu sur le support (44) de la chambre de contrôle (43) .

2. Dispositif de contrôle selon la revendication 1, **caractérisé en ce que** la douille d'écartement (22) présente une longueur telle que, dans une position de contrôle (51) de la boîte (12) par rapport au dispositif de contrôle (11), la douille de guidage (21) s'insère dans l'ouverture (17) du couvercle (15) et le dispositif d'écartement (23) dans l'ouverture (17) du fond (16) de la boîte (12).

3. Dispositif de contrôle selon la revendication 1 ou 2, **caractérisé en ce que** le dispositif d'écartement (23) comprend un manchon de réception (29) avec une partie de retenue (31) pour recevoir l'élément de serrage annulaire (32) et un élément d'écartement (33) associé à la partie de retenue (31) de la douille de réception (29), l'élément d'écartement (33) présentant une surface d'écartement (34) conique tournée vers l'élément de serrage (32), de préférence **en ce que**, dans la position de repos (37) du dispositif d'écartement (23), la douille de réception (29), l'élément d'écartement (33) et/ou l'élément de serrage (32) présentent une circonférence extérieure qui se situe sur un diamètre de douille commun et, de préférence, que le diamètre de douille du dispositif d'écartement (23) corresponde à la circonférence extérieure de la douille de guidage (21) ou soit inférieur à celle-ci, et de préférence que le diamètre d'enveloppe du dispositif d'écartement (23) et le pourtour extérieur de la douille de guidage (21) soient inférieurs à l'ouverture (17) dans le couvercle (15) et le fond (16) de la boîte (12).

4. Dispositif de contrôle selon la revendication 3, **caractérisé en ce qu'**un mouvement de levage de la tige de traction (24) en direction de la douille de guidage (21) fait passer le dispositif d'écartement (23) de la position de repos (37) à la position de travail (38) et **en ce que** l'élément de serrage (32) est élargi radialement vers l'extérieur par la surface d'écartement (34) de l'élément d'écartement (33) et qu'un mouvement de levage de l'élément d'écartement (33) de la position de repos (37) à la position de travail (38) est de préférence limité par une butée frontale sur la partie de retenue (31) de la douille de réception (29).

5. Dispositif de contrôle selon l'une des revendications précédentes, **caractérisé en ce que** le dispositif d'écartement (23) est disposé de manière étanche aux fluides par rapport à la douille d'écartement (22) dans la position de travail (38).

6. Dispositif de contrôle selon l'une des revendications précédentes, **caractérisé en ce qu'**une section de raccordement (26) pour un élément d'entraînement (27) pouvant y être disposé est prévue à une extrémité de la tige de traction (24) opposée au dispositif d'écartement (23), et de préférence la tige de traction (24) est conçue à partir de la section de raccordement (26) en direction du dispositif d'écartement (23) et comporte au moins une ouverture (35) prévue dans la paroi périphérique, qui est alignée de manière adjacente à au moins une ouverture (36) dans la paroi périphérique de la douille d'écartement (22).

7. Procédé pour contrôler l'étanchéité de boîtes ouvertes non remplies (12), en particulier des bombes aérosols, qui sont constituées de plusieurs parties et comprennent une paroi de récipient (14) avec un fond (16) et un couvercle (15) disposés sur celle-ci, une ouverture (17) étant prévue dans le fond (16) et dans le couvercle (15),
- dans lequel la boîte (12) est amenée à un plateau d'alimentation (42) d'une station de contrôle (41) qui comprend, sur une roue de contrôle (45), au moins une chambre de contrôle (43) dans laquelle un dispositif de contrôle (11) est maintenu dans la chambre de contrôle (43) par un logement (44),
- dans lequel le dispositif de contrôle (11) et/ou la boîte (12) sont déplacés l'un vers l'autre de telle sorte que le dispositif de contrôle (11) soit positionné à l'intérieur de la boîte (12), **caractérisé en ce que**
- que le dispositif de contrôle (11) est transféré d'une position de repos (37) à une position de travail (38) et que la boîte (12) est transférée dans une position de contrôle (51) par rapport au dispositif de contrôle (11), un dispositif d'écartement (23) du dispositif de contrôle (11) est écarté lors du transfert vers la position de travail (38) et s'engage de manière étanche derrière l'ouverture (17) du fond (16) de la boîte (12) et positionne la boîte (12) de manière étanche contre un élément d'étanchéité (47) prévu sur le logement (44) de la chambre de contrôle (43).

8. Procédé selon la revendication 7, **caractérisé en ce que** la boîte (12) est maintenue en position de contrôle (51) par le dispositif de contrôle (11) en suspension libre.

9. Procédé selon la revendication 7 ou 8, **caractérisé en ce que** le dispositif de contrôle (11) est activé par un mouvement de levage à l'aide d'un élément d'entraînement (27) de la station de contrôle (41) agissant sur la tige de traction (24) et est amené dans la position de travail (38).

10. Procédé selon l'une des revendications 7 à 9, **caractérisé en ce qu'**après le transfert de la boîte (12) dans la position de contrôle (51), la boîte (12) est soumise à un fluide sous pression, en particulier de l'air comprimé, qui est acheminé vers l'intérieur de la boîte (12), et de préférence, une pression régnant dans la chambre de contrôle (43) est surveillée par un dispositif capteur et en particulier, les boîtes (12) sont soumises à une pression d'essai pouvant atteindre 10 bars, de préférence pendant une durée prédéterminée.

11. Procédé selon l'une des revendications 7 à 10, **caractérisé en ce que** la boîte (12) est soulevée dans la position de contrôle (51) par rapport au dispositif de contrôle (11) par rapport à une surface d'appui (48) du plateau d'alimentation (42) de l' , de préférence à une distance (E) supérieure à la variation de longueur de la boîte (12) lorsqu'elle est soumise à la pression de contrôle du fluide de contrôle.

12. Procédé selon l'une des revendications 7 à 11, **caractérisé en ce qu'**après le contrôle d'étanchéité de la boîte (12), la mise sous pression de la boîte (12) avec le fluide de contrôle est interrompue et le dispositif de contrôle (11) et la boîte (12) sont séparés l'un de l'autre dans des directions opposées pour être transférés dans la position de contrôle (51).

13. Procédé selon l'une des revendications 7 à 12, **caractérisé en ce que**, lorsque le contrôle d'étanchéité (12) est réussi, la boîte est transférée vers une station de traitement suivante pour un traitement ultérieur et **en ce que**, lorsque le contrôle d'étanchéité échoue, la boîte (12) est évacuée de la station de contrôle (41) en tant que rebut.

14. Station de contrôle pour le contrôle d'étanchéité de boîtes ouvertes non remplies (12), en particulier des boîtes aérosols, qui sont constituées de plusieurs parties et comprennent une paroi de récipient (14) avec un fond (16) et un couvercle (15) disposés sur celle-ci, une ouverture (17) étant prévue dans le fond (16) et dans le couvercle (15),
- avec un plateau d'alimentation (42) pour alimenter les boîtes (12),
- avec des chambres de contrôle (43) prévues sur une roue de contrôle (45), dans chacune desquelles un dispositif de contrôle (11) est maintenu à l'aide d'un support (44),
- avec un dispositif pour fournir un fluide sous pression avec une pression de contrôle,
- avec un dispositif capteur sur ou dans la chambre de contrôle (43) pour la détection de la pression,
- le dispositif de contrôle (11) étant conçu selon l'une des revendications 1 à 6 précédentes.

15. Station de contrôle selon la revendication 14, **caractérisée en ce que** la hauteur de la chambre de contrôle (43) est supérieure à la hauteur de la boîte (12) à contrôler et/ou **en ce que** le dispositif de contrôle (11) est maintenu dans le logement (44) de la chambre de contrôle (43) et qu'un élément d'étanchéité (47) est prévu dans le logement (44) de la chambre de contrôle (43), lequel élément d'étanchéité s'appuie de manière étanche radialement contre la douille de guidage (43) et s'appuie axialement contre l'ouverture (17) de la boîte (12) dans la position d'essai (51).
